# EUROPEAN PATENT SPECIFICATION

(11) **EP 3 492 278 B1**
(45) Date of publication and mention of the grant of the patent: **26.08.2020**
(21) Application number: 18166264.4
(22) Date of filing: 09.04.2018
(51) Int. Cl.: D01F 6/60, B29D 30/38, B60C 9/22, B60C 9/00, D01F 6/62, D01F 6/30

(54) **THIN LAYER CAPPLY AND LOW-WEIGHT TIRE USING THE SAME**
DÜNNSCHICHTIGES CAPPLY UND LEICHTGEWICHTIGER REIFEN MIT VERWENDUNG DAVON
COUCHE MINCE CAPPLY ET PNEU LÉGER L'UTILISANT

(30) Priority: 29.11.2017 KR 20170161612
(43) Date of publication of application: 05.06.2019
(73) Proprietor: Kumho Tire Co., Inc., Gwangju 62392 (KR)
(72) Inventor: LEE, Sang-Woo, Gyeonggi-do 16679 (KR)
(74) Representative: Schweitzer, Klaus

(56) References cited:
- EP-A1- 3 042 788
- RU-C1- 2 567 070
- US-A1- 2017 100 964

## Description

### [BACKGROUND OF THE INVENTION]

### 1. Field of the Invention

The present invention relates to a capply for a tire and a low-weight tire using the same, and more particularly, to a thin layer capply which is manufactured by spinning cord strands forming a capply cord in a thin tape form, thereby it is possible to maintain the same stiffness as a whole and reduce a weight of the tire, and a low-weight tire to which the thin layer capply is applied.

### 2. Description of the Related Art

For reducing a weight of a tire, it is necessary to reduce the weight by applying various low-weight reinforcement materials while maintaining a strength or stiffness of the tire. As a solution for this, there is a method of reducing a rubber gauge, or a method of reducing the weights of a fiber cord and a steel cord used as a reinforcement material.

The fiber cord as a reinforcement material is used for a carcass ply, a capply, an edge ply, or the like. For these cords, fibers such as polyester, nylon, aramid, polyketone, or the like are used, and various application methods therefor according to an application have been studied.

In the recent global automobile market, a lot of resources and time have been invested to achieve a weight reduction of a vehicle to meet demands for environmental friendliness, that is, to cope with environmental problems in this era of high oil prices by developing relevant technologies.

Accordingly, in order to manufacture a lighter tire than the existing tire, studies for reducing a weight as well as maximally improving physical properties of the cords used as the reinforcement material for the tire have been continuously conducted.

For example, Korean Patent Laid-Open Publication No. 2016-0086157 (laid-open on July 19, 2016) discloses a capply of a pneumatic tire and a method for manufacturing a capply of the pneumatic tire, and Korean Patent Registration No. 10-1342702 (registered on December 11, 2013) discloses a tire cord and a tire including the same.

In addition, Russia Patent Publication No. 2 567 070 discloses a pneumatic tire carcass.

United States Patent Publication No.2017/100964 discloses a pneumatic tire, and pneumatic tire production method.

European Patent Publication 3 042 788 disclose a capply for pneumatic tire and method of manufacturing capply for pneumatic tire.

However, these documents have not proposed an alternative solution in regard to the above problems.

### [SUMMARY OF THE INVENTION]

In consideration of the above-mentioned circumstances, it is an object of the present invention to provide a thin layer capply which is manufactured by spinning cord strands used for a capply cord in a thin tape form, thereby it is possible to maintain the same stiffness as a whole and reduce a weight of the tire, and a low-weight tire to which the thin layer capply is applied.

In order to achieve the above object, according to an aspect of the present invention, there is provided a thin layer capply, according to claim 1, including: a cord spinning layer which is formed in a thin tape form by spinning a plurality of cord strands; and a rubber coating layer which is coated on the cord spinning layer to cover an outer portion of the cord spinning layer.

Herein, the cord strand may be made of any one or more materials selected from polyester, nylon, aramid, polyketone, and polyethylene terephthalate (PET).

In addition, a fineness of warp yarn of the cord strands forming the cord spinning layer is 667tex to 1556tex (6000 D to 14000 D), and the number of warp yarns is 20 to 25.

Further, the material strength of one cord strand may be 72 g/tex to 99 g/tex (8 g/d to 11 g/d).

Further, a width of the thin layer capply may be 10 mm to 15 mm, and a thickness of the thin layer capply is 0.2 mm to 0.4 mm.

Furthermore, the rubber coating layer may be made of a compound including any one or more of resorcinol formalin latex (RFL), a maleic anhydride resin, and isocyanate.

According to another aspect of the present invention, there is provided a method of manufacturing a low-weight tire including: a step of forming a cord spinning layer by spinning a plurality of cord strands in a thin tape form; a rubber dip coating step of forming a rubber coating layer so as to cover an outer portion of the cord spinning layer; and a step of drying the rubber coating layer prepared through the rubber dip coating step by a dryer.

According to another aspect of the present invention there is provided a low-weight tire according to claim 6, including: a thin capply formed to cover an upper side of a belt layer in a tread rubber layer.

The thin layer capply and the low-weight tire to which the thin layer capply is applied according to the present invention have effects of reducing a rolling resistance of the tire through a weight reduction and improving fuel efficiency of a vehicle in which the tires are mounted while maintaining stiffness required for the tire, by forming the cord spinning layer in a thin tape form by spinning and depositing a plurality of cord strands, rather than twisting a plurality of cord strands to form the capply cord.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a front cross-sectional view of a thin layer capply according to an embodiment of the present invention;
FIG. 2 is photographs showing steps of a process of manufacturing the thin layer capply of FIG. 1;
FIG. 3 is photographs showing a process of forming a cord spinning layer in the process of manufacturing the thin layer capply of FIG. 2;
FIG. 4 is an enlarged photograph showing a tangled state of cord strands in the process of forming the cord spinning layer of FIG. 3.
FIG. 5 is a schematic view illustrating a rubber dip coating process of forming a rubber coating layer in the process of manufacturing the thin layer capply of FIG. 2;
FIG. 6 is a half cross-sectional view illustrating a low-weight tire to which the thin layer capply of FIG. 1 is applied;
FIG. 7 is a photograph showing a state in which cord strands forming the cord spinning layer of FIG. 1 are split;
FIG. 8 is a front cross-sectional view of a conventional capply; and
FIG. 9 is an enlarged photograph showing a tangled state of a capply cord applied to the conventional capply of FIG. 8.

### [DETAILED DESCRIPTION OF THE INVENTION]

Hereinafter, preferred embodiments of the present invention will be described in detail with reference to the accompanying drawings, so that persons having common knowledge in the technical field to which the present invention pertains may easily implement the invention. In the drawings, publicly known functions and configurations that are judged to be able to make the purport of the present invention unnecessarily obscure will not be illustrated. Referring to the drawings, wherein like reference characters designate like or corresponding parts throughout the several views.

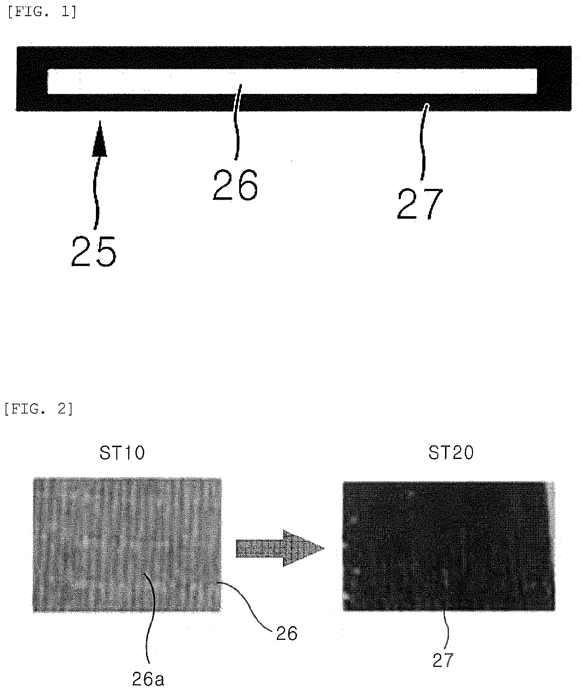

FIG. 1 is a front cross-sectional view of a thin layer capply according to an embodiment of the present invention.

Referring to FIG. 1, a thin layer capply 25 according to the present embodiment includes a cord spinning layer 26, and a rubber coating layer 27 covering an outer portion of the cord spinning layer 26 so as to enclose the same.

The cord spinning layer 26 is formed in a thin tape form by spinning a plurality of cord strands 26a. In addition, the rubber coating layer 27 is formed by coating so as to cover the outer portion of the cord spinning layer 26.

In the present embodiment, an example, in which the cord strands 26a forming the cord spinning layer 26 are made of nylon, will be described. However, the present invention is not particularly limited thereto, and as long as the plurality of cord strands 26a are not twisted together, but can be spun to form the cord spinning layer 26 in the thin tape form, the cord strands may be made of any one or more materials selected from polyester, nylon, aramid, polyketone, and polyethylene terephthalate (PET).

Meanwhile, the fineness of warp yarn of the cord strands 26a forming the cord spinning layer 26 is 667 tex to 1556 tex (6000 D to 14000 D), and the number of warp yarns is 20 to 25.

Herein, when the fineness of warp yarn of the cord strands 26a exceeds 1556 tex (14000 D), physical properties thereof may be more improved than those of a conventional capply 250. However, since the same material, nylon is used for manufacturing, a thickness of the cord strand is eventually increased. Accordingly, a thickness of a nylon strand (one warp yarn) is increased, and in this case, a phenomenon, in which the nylon cord strands (i.e., one warp yarn) are split apart from each other, occurs.

In addition, when the fineness of warp yarn of the applied cord strands 26a is less than 667 tex (6000 D), since the thickness is too small, there is a need to satisfy the physical properties by increasing the number of warp yarns. In this case, since too many layers are laminated, rubber may not infiltrate at the time of rubber dip coating to be described below for forming the rubber coating layer 27. As a result, a phenomenon, in which the nylon cord strands (warp yarns) are split apart from each other, occurs.

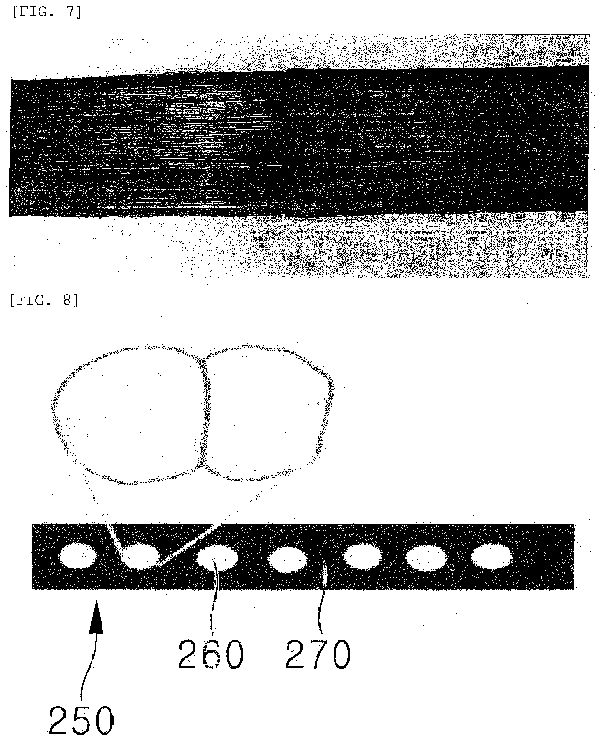

In conclusion, when the linear density of the cord strands 26a forming the cord spinning layer 26 is within the range of 667 tex to 1556 tex (6000 D to 14000 D), the cord strands may be applied in the capply form without the phenomenon, in which the nylon cord strands are split apart from each other, as illustrated in FIG. 7.

Further, the fineness of warp yarn is obtained by multiplying the number of warp yarns (the number of threads) and denier of the thread. In a case of the thin layer capply as the present embodiment, the capply is manufactured by laminating the warp yarns one by one. Accordingly, since the number of warp yarns exceeds 25, which is too excessively large, the phenomenon in which the warp yarns are split apart from each other, occurs. When the number of warp yarns is less than 20, which is excessively small, the physical properties required for the thin layer capply may not be achieved.

Meanwhile, it is preferable to use the cord strand 26a having a material strength of one warp yarn in a range of 72 g/tex to 99 g/tex (8 g/d to 11 g/d). If the material strength thereof is out of the above range, the physical properties required for the capply of the present invention used for a low-weight tire are not satisfied.

The reason is as shown in Table 1 below. Table 1 shows results of a comparative experiment on a strength of the thin layer capply and a strength of the general nylon capply when the material strength of one warp yarn is 72 g/tex to 99 g/tex (8 g/d to 11 g/d).

That is, as a result of the case in which the number of warp yarns is 25 (the maximum number of warp yarns), an excellent strength may be exhibited while decreasing thickness(g/A) as compared to the general nylon capply.

**[Table 1]**

| Classificati on | Thin layer capply | | | | | Nylon capply (convent |
|---|---|---|---|---|---|---|
| | Experimental Example 1 | Experimental Example 2 | Experimental Example 3 | Experimental Example 4 | Experimental Example 5 | |
| One warp yarn (denier) | 280 | 320 | 440 | 480 | 560 | 840 |
| Fineness of warp yarn (denier) | 7000 | 8000 | 11000 | 12000 | 14000 | 8400 |
| Material strength (g/d) | 7 | 8 | 10 | 11 | 11.5 | 7.10 |
| Strength (kg/EA) | 1.96 | 2.56 | 4.4 | 5.28 | 6.44 | 5.964 |
| The number of warp yarns | 25 | 25 | 25 | 25 | 25 | 10 |
| Strength at fineness of war yarn | 49 | 64 | 110 | 132 | 161 | 59.64 |
| Compariso n in strength (%) | 82% | 107% | 184% | 221% | 270% | 100% |
| Thickness | 0.24 | 0.28 | 0.32 | 0.36 | 0.36 | 0.86 |

Meanwhile, the fiber cord itself is not adhesive to rubber. Therefore, in the present embodiment, as an example of a method for adhering the fiber cord to the rubber, a method, in which the fiber cord is first subject to an epoxy and isocyanate dip process and then subject to an RFL dip process, will be described.

That is, the fiber cord is activated through the epoxy and isocyanate dip process so as to sufficiently have solubility/hydrogen bond/reactive group/affinity which are insufficient in the fiber cord, and then, is subject to the RFL dip process so as to be adhered to the rubber.

However, the present invention is not particularly limited thereto, and as long as an adhesive force of the fiber cord itself to the rubber can be increased through the rubber coating layer, the rubber coating layer may be made of a rubber compound including any one or more of resorcinol formalin latex (RFL), a maleic anhydride resin, and isocyanate.

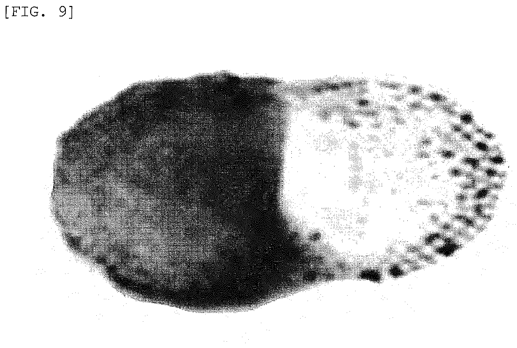

Referring to FIGS. 8 and 9, the general capply 250 applied to the conventional tire uses a raw cord formed by manufacturing cord strands through melt-spinning of nylon, and then twisting the cord strands.

At this time, in order to secure desired physical properties, the cord strand is spun to a specific denier, two plies are twisted to form a cord in a thread form, and the cord is topped with rubber through rolling and cutting processes, thereby manufacturing a sheet-like semifinished product.

However, in the case of thin layer capply 25 according to the present embodiment, the cord spinning layer 26 corresponding to the conventional capply cord 260 is manufactured by spinning the cord strands 26a, rather than twisting the cord strands 26a, and laminating the cord strands 26a in a thin tape form, and the rubber coating layer 27 is formed by coating the cord spinning layer 26 with rubber to cover the outer portion of the cord spinning layer 26. As a result, the thickness of the capply may be decreased and the weight thereof may be reduced to achieve the weight reduction, while maintaining the stiffness required for the capply forming the tire as it is.

Hereinafter, a process of manufacturing the thin layer capply 25 will be described with reference to FIGS. 2 to 5.

FIG. 2 is photographs showing steps of a process of manufacturing the thin layer capply of FIG. 1.

Referring to FIG. 2, the process of manufacturing the thin layer capply 25 includes a cord spinning layer forming step (ST10), and a rubber coating layer forming step (ST20).

Herein, in the cord spinning layer forming step (ST10), the cord spinning layer 26 is formed by spinning the plurality of cord strands 26a in a thin tape form.

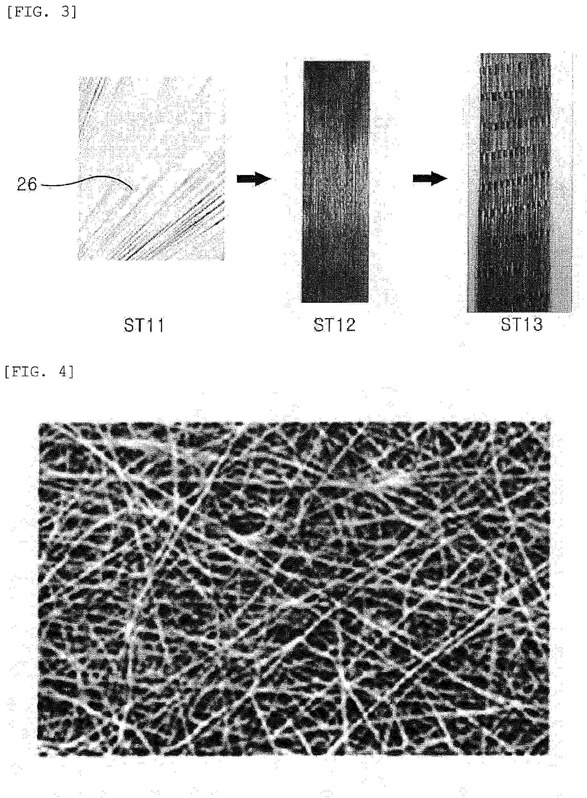

FIG. 3 is photographs showing a process of forming the cord spinning layer in the process of manufacturing the thin layer capply of FIG. 2, and FIG. 4 is an enlarged photograph showing a tangled state of the cord strands in the process of forming the cord spinning layer of FIG. 3.

Referring to FIGS. 3 and 4, the cord spinning layer forming step (ST10) may include a spinning step (ST11), a depositing step (ST12), and a fixing step (ST13).

First, in the spinning step (ST11), the cord strands 26a formed by melt-spinning the nylon material are formed in a thin tape form.

In the depositing step (ST12), the plurality of cord strands 26a spun in the thin tape form are deposited to each other.

As shown in FIG. 4, the plurality of cord strands 26a deposited to each other in the depositing step (ST12) are overlapped with each other in multiple layers to be in a state in which micro surfaces are tangled.

Next, in the fixing step (ST13), the plurality of deposited cord strands 26a are fixed to maintain the thin tape form.

The cord spinning layer 26 formed in a sheet form through the above processes are wound in a roll form to complete a semifinished product of the thin layer capply 25 through the rubber coating layer forming step (ST20) to be described below.

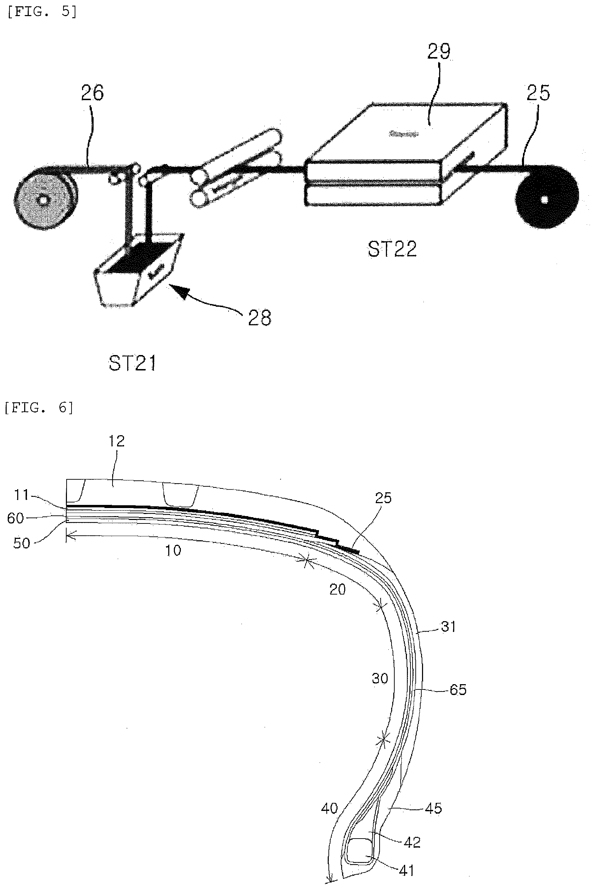

FIG. 5 is a schematic view illustrating a rubber dip coating process of forming a rubber coating layer in the process of manufacturing the thin layer capply of FIG. 2.

Referring to FIG. 5, the rubber coating layer forming step (ST20) includes a rubber dip coating step (ST21) and a drying step (ST22).

In the rubber dip coating step (ST21), the rubber coating layer 27 covering the outer portion of the cord spinning layer 26 is formed through the rubber dip coating process in which a wound roll having the sheet-like cord spinning layer 26 wound thereon is placed, and then the cord spinning layer 26 is unwound at a predetermined speed through transfer rollers, and passes through a tank 28 filled with the above-described rubber compound to be thinly coated with the rubber.

Further, in the drying step (ST22), the thin layer capply 25 is completed by passing the rubber coating layer 27 coated on the outer portion of the sheet-like cord spinning layer 26 through the rubber dip coating process by a dryer 29.

Then, the completed thin layer capply 25 is cut according to a size of a tire to be completed when molding the tire, and is wound in a roll.

According to the process of manufacturing the thin layer capply 25 of the present embodiment, the rolling process is excluded, thus productivity may be improved through simplification of the manufacturing process, in comparison to the process of manufacturing the general nylon capply 250 conventionally used, and since the cord spinning layer 26 applied to the thin layer capply 25 is manufactured in a thin tape form by spinning, the thickness of the capply may be decreased while maintaining the stiffness required for the capply as compared to the conventionally used nylon capply 250, and weight reduction of the tire using the thin layer capply 25 may be achieved.

Hereinafter, a low-weight tire 1 to which the thin layer capply 25 is applied will be described with reference to FIG. 6.

FIG. 6 is a half cross-sectional view illustrating a low-weight tire to which the thin layer capply of FIG. 1 is applied.

Referring to FIG. 6, the low-weight tire 1 to which the thin layer capply 25 of the present embodiment is applied basically is a pneumatic tire in which a shoulder part 20, a side wall part 30, and a bead part 40 are sequentially formed so as to be extended at both sides about a tread part 10.

In the tread part 10, the shoulder part 20, the side wall part 30, and the bead part 40, a carcass ply 60 serving as a frame of the tire is laminated on an inner liner 50 having excellent air-tightness, and extends along a width direction of the tire.

In the tread portion 10, a belt 11 and a tread rubber layer 12 are sequentially laminated on the carcass ply 60.

The belt 11 which is a special cord fabric positioned between the carcass ply 60 and an under tread 15 alleviates external shock and prevents cracks or external damage generated at the tread rubber layer 12 from directly propagating to the carcass ply 60.

The shoulder part 20 has a thickness gradually decreased from the tread part 10, and is a portion to be connected with the side wall part 30.

The side wall rubber layer 31 which forms an outer side surface of the tire and is made of rubber covers the carcass ply 60 to protect the same, and supports a load of the vehicle and alleviates external shock caused by contraction and expansion.

Further, at the bead part 40, an end portion of the carcass ply 60 is turned up (bent upward) to enclose a bead wire 41 and an apex 42 to be adhered thereto.

Meanwhile, the turned up part 65 of the carcass ply 60 is formed to partially cover at an outside of the side wall part 30 adjacent to the bead part 40.

The bead wire 41 which is a bundle of wires in which a steel wire is coated with rubber serves as a frame for coupling and fixing the tire to a rim.

The apex 42 is formed in a triangle shape in which a width is gradually decreased upward from the bead wire 41, prevents dispersion of the bead wire 41, alleviates shock, and prevents pneumaticity from occurring at the bead part 40 at the time of molding.

Meanwhile, the capply 25 covering an upper side of the belt 11 is laminated in the tread part 10 and the shoulder part 20.

The capply 25 which is a special cord fabric adhered to the belt 11 may minimize a movement of the belt 11 at the time of driving, thereby preventing a separation phenomenon at the time of high-speed driving.

Herein, as the capply, the above-described thin layer capply 25 is used.

Meanwhile, it is preferable that the thin layer capply 25 applied to the low-weight tire 1 is cut to have a width within a range of 10 mm to 15 mm.

**[Table 2]**

| Unit: percentage (%) | | | | | |
|---|---|---|---|---|---|
| | Thin layer capply | | | | |
| Classifi cation | Experime ntal Example 6 (10mm) | Experime ntal Example 7 (15mm) | Experime ntal Example 8 (5mm) | Experime ntal Example 9 (20mm) | Remarks |
| Weight (%) of semifini shed product | 100 | 150 | 50 | 200 | The higher the heavier |
| Weight (%) of tire | 100 | 104 | 96 | 108 | |
| RRc (%) | 100 | 98 | 102 | 96 | The higher the better in performa nce |
| ECE-R30 (%) | 100 | 99 | 93 | 90 | |
| FMVSS-139H (%) | 100 | 99 | 92 | 91 | |
| FMVSS-139E (%) | 100 | 101 | 90 | 93 | |

The above table 2 shows results of an experiment of comparing a weight of a semifinished product of the thin layer capply 25 according to a cut width of the thin layer capply, a weight of the low-weight tire 1 to which the thin layer capply 25 is applied, rolling resistance (RRc, %), defined tire high speed durability (ECE-R30, FMVSS-139H, %), and tire load durability (FMVSS-139E, %) in a case in which the cut width is 10 mm.

Accordingly, when the cut width of the thin layer capply 25 is less than 10 mm, the thin layer capply 25 encloses the tire 1 excessively densely, such that the durability of the tire is deteriorated (Experimental Example 8, 5 mm), and when the cut width of the thin layer capply 25 exceeds 15 mm, the thin layer capply 25 is wound too little, such that the tire 1 is deformed at the time of molding the tire, resulting in a relative deterioration in the performance (Experimental Example 9, 20 mm).

As such, when the width of the thin layer capply 25 is within the range of 10 mm to 15 mm, the physical properties of the tire may be preserved, and weight reduction of the tire may be achieved (Experimental Examples 6 and 7).

**[Table 3]**

| Unit: percentage (%) | | | | | |
|---|---|---|---|---|---|
| Classifi cation | Capply (conventi onal) | Thin layer capply (present invention) | | | |
| | | Experime ntal Example 10 | Experime ntal Example 11 | Experime ntal Example 12 | Experime ntal Example 13 |
| Material of capply | Nylon | PET | Nylon | | |
| Winding type of capply | A | A | A | B | C |
| Weight (%) of semifini shed product | 100 | 60 | 50 | 52 | 55 |
| Weight (%) of tire | 100 | 90 | 91 | 91 | 92 |
| RRc (%) | 100 | 106 | 105 | 105 | 104 |
| ECE-R30 (%) | 100 | 105 | 104 | 104 | 103 |
| FMVSS-139H (%) | 100 | 105 | 103 | 102 | 103 |
| FMVSS-139E (%) | 100 | 102 | 104 | 103 | 105 |

The above table 3 shows results of an experiment on a weight of a semifinished product of the thin layer capply 25, a weight of the low-weight tire 1 to which the thin layer capply 25 is applied, rolling resistance (RRc, %), defined tire high speed durability (ECE-R30, FMVSS-139H, %), and tire load durability (FMVSS-139E, %), based on comparison between the conventional tire to which the conventional general capply 250 is applied and the low-weight tire 1 to which the thin layer capply 25 according to the present invention is applied.

The capply 250 used for the conventional radial tire for a vehicle has a thickness of 0.8 mm to 1.2 mm. However, the thin layer capply 25 of Experimental Examples 10 to 13 according to the present embodiment may be configured to have a thickness of 0.2 mm to 0.4 mm.

In the case of the conventional radial tire for a vehicle, the capply 250 made of a nylon material is wound in a winding type A, whereas, in Experimental Example 10 according to the present invention, the thin layer capply 25 made of a PET material differently from the conventional capply is wound in the winding type A, and in Experimental Examples 11 to 13, the same nylon material as that of the conventional capply is used, but the thin layer capplies 25 are wound in different winding types A, B, and C, respectively.

Herein, the winding type A means that the capply 25 is wound to entirely cover the belt layer 11, the winding type B means that the capply 25 is further wound around only both edges of the belt layer 11 in addition to the winding type A, and the winding type C means that the capply 25 is wound at a winding interval smaller than that of the winding type A.

All of Experimental Examples 10 to 13 in which the thin layer capply 2 according to the present invention is applied show that the weight of the tire may be reduced as compared to the tire to which the conventional capply 250 is applied, and Experimental Examples 11 to 13 show that even when the thin layer capply 25 made of the same nylon material is applied, the weight becomes different depending on the winding type of the capply.

Accordingly, in the case of the low-weight tire 1 to which the thin layer capply 25 according to the present embodiment is applied, as compared to the tire to which the conventional capply 250 is applied, the weight (%) of semifinished product may be reduced by 40% to 50%, the weight (%) of the tire may be reduced by 8% to 10%, and the rolling resistance (RRc, %), the defined tire high speed durability (ECE-R30, FMVSS-139H, %), and the tire load durability (FMVSS-139E, %) may be improved by 4% to 6%, 2% to 5%, and 2% to 5%, respectively. As a result, it is possible to improve fuel efficiency of the vehicle.

### [Description of Reference Numerals]

1: low-weight tire, 10: tread part
11: belt, 12: tread rubber layer
20: shoulder part, 25: thin layer capply
26: cord spinning layer, 26a: cord strands
27: rubber coating layer, 28: tank
29: dryer, 30: side wall part
31: side wall rubber layer, 40: bead part
41: bead wire, 42: apex
250: conventional capply, 260:conventional capply cord
270: topping rubber

## Claims

1. A thin layer capply(25), comprising:
a cord spinning layer(26) which is formed in a thin tape form by spinning a plurality of cord strands(26a); and
a rubber coating layer(27) which is coated on the cord spinning layer(26) to cover an outer portion of the cord spinning layer(26),
wherein a fineness of warp yarn of the cord strands (26a) forming the cord spinning layer (26) is 667 tex to 1556 tex (6000 D to 14000 D), and the number of warp yarns is 20 to 25.

2. The thin layer capply(25) of claim 1, wherein the cord strand (26a) is made of any one or more materials selected from polyester, nylon, aramid, polyketone, and polyethylene terephthalate (PET).

3. The thin layer capply(25) of claim 1, wherein the material strength of one cord strand(26a) is 72 g/tex to 99 g/tex (8 g/d to 11 g/d).

4. The thin layer capply(25) of claim 3, wherein a width of the thin layer capply(25) is 10 mm to 15 mm, and a thickness of the thin layer capply(25) is 0.2 mm to 0.4 mm.

5. The thin layer capply(25) of claim 1, wherein the rubber coating layer(27) is made of a compound including any one or more of resorcinol formalin latex (RFL), a maleic anhydride resin, and isocyanate.

6. A low-weight tire(1) comprising:
the thin layer capply(25) of any one of claims 1 to 5, formed to cover an upper side of a belt layer(11) in a tread rubber layer(12).

## Patentansprüche

1. Dünnschicht-Decklage (25), umfassend:
eine Cordspinnschicht (26), die in einer dünnen Bandform durch Spinnen einer Vielzahl von Cordsträngen (26a) gebildet ist; und
eine Kautschukbeschichtungsschicht (27), die auf die Cordspinnschicht (26) geschichtet ist, um einen äußeren Teil der Cordspinnschicht (26) zu bedecken,
wobei die Feinheit von Kettgarn der Cordstränge (26a), die die Cordspinnschicht (26) bilden, 667 tex bis 1556 tex (6000 D bis 14000 D) beträgt und die Anzahl von Kettfäden 20 bis 25 beträgt.

2. Dünnschicht-Decklage (25) gemäß Anspruch 1, wobei der Cordstrang (26a) aus einem oder mehreren Materialien ausgewählt aus Polyester, Nylon, Aramid, Polyketon und Polyethylenterephthalat (PET) besteht.

3. Dünnschicht-Decklage (25) gemäß Anspruch 1, wobei die Materialfestigkeit eines Cordstrangs (26a) 72 g/tex bis 99 g/tex (8 g/d bis 11 g/d) beträgt.

4. Dünnschicht-Decklage (25) gemäß Anspruch 3, wobei die Breite der Dünnschicht-Decklage (25) 10 mm bis 15 mm beträgt und die Dicke der Dünnschicht-Decklage (25) 0,2 mm bis 0,4 mm beträgt.

5. Dünnschicht-Decklage (25) gemäß Anspruch 1, wobei die Kautschukbeschichtungsschicht (27) aus einer Verbindung besteht, die eines oder mehrere von Resorconol-Formalin-Latex (RFL), einem Maleinsäureanhydridharz und Isocyanat besteht.

6. Reifen mit niedrigem Gewicht (1), umfassend:
die Dünnschicht-Decklage (25) gemäß einem der Ansprüche 1 bis 5, gebildet, um eine Oberseite der Gürtelschicht (11) in einer Laufflächenkautschukschicht (12) zu bedecken.

## Revendications

1. Nappe sommet en couche mince (25), comprenant :
une couche de filage de câblés (26) qui est formée dans une forme de bande mince en filant une pluralité de fils câblés (26a) ; et
une couche de revêtement de gomme (27) qui est revêtue sur la couche de filage de câblés (26) pour couvrir une portion extérieure de la couche de filage de câblés (26),
dans laquelle une finesse de fil de chaîne des fils câblés (26a) formant la couche de filage de câblés (26) est de 667 tex à 1 556 tex (6 000 D à 14 000 D), et le nombre de fils de chaîne est de 20 à 25.

2. Nappe sommet en couche mince (25) selon la revendication 1, dans laquelle le fil câblé (26a) est fait d'un quelconque ou de plusieurs matériaux sélectionnés parmi du polyester, du nylon, un aramide, une polycétone, et du polyéthylène téréphtalate (PET).

3. Nappe sommet en couche mince (25) selon la revendication 1, dans laquelle la résistance de matériaux d'un fil câblé (26a) est de 72 g/tex à 99 g/tex (8 g/d à 11 g/d).

4. Nappe sommet en couche mince (25) selon la revendication 3, dans laquelle une largeur de la nappe sommet en couche mince (25) est de 10 mm à 15 mm, et une épaisseur de la nappe sommet en couche mince (25) est de 0,2 mm à 0,4 mm.

5. Nappe sommet en couche mince (25) selon la revendication 1, dans laquelle la couche de revêtement de gomme (27) est faite d'un composé incluant l'un quelconque ou plusieurs d'un résorcinol formaline latex (RFL), une résine à l'anhydride maléique, et un isocyanate.

6. Pneu de faible poids (1) comprenant :
la nappe sommet en couche mince (25) selon l'une quelconque des revendications 1 à 5, formée pour couvrir un côté supérieur d'une couche de ceinture (11) dans une couche de gomme de bande de roulement (12).
